# EUROPEAN PATENT APPLICATION

(11) **EP 0 895 393 A2**
(43) Date of publication of application: **03.02.1999**
(21) Application number: 98114332.4
(22) Date of filing: 30.07.1998
(51) Int. Cl.: H04M 1/72, H04M 1/272

(54) **Radio communication terminal and corresponding method**

(30) Priority: 30.07.1997 KR 3625597
(71) Applicant: SAMSUNG ELECTRONICS CO. LTD., Suwon-city, Kyungki-do (KR)
(72) Inventor: Kim, Ki-Hwan, Yongin-shi, Kyonggi-do (KR)
(74) Representative: Grünecker, Kinkeldey, Stockmair & Schwanhäusser Anwaltssozietät

(57) **Abstract**

The invention provides a radio communication terminal having a call retry function and a related method. The radio communication terminal comprises first means for deciding whether a connection has been established and second means for, in the event of a call connection failure, periodically retrying the call each time a first time interval elapses, until the lapse of a second time interval. According to the corresponding method, a call is attempted and it is decided whether a connection is established. If not, the call is periodically retried each time a first time interval elapses, until the lapse of a second time interval.

## Description

The invention relates to a radio communication terminal, and more particularly, to a radio communication terminal which can automatically retry a call in the event of a call connection failure and a method for performing such a call retry function.

Reasons for a call connection failure may be the busy state of the called party, the unavailability of channels of a base station caused by a congestion of calls, and other problems of communication. If a connection could therefore not be established the user is unable to get any information about the reasons thereof. The user can therefore not predict when the connection may be established, and thus he repeatedly attempts to place a call. This is usually felt to be troublesome and inconvenient.

It is therefore the object of the invention to provide a radio communication terminal and a corresponding method which are more convenient in case a connection failure has occurred.

This object is solved by the subject matters of independent claims 1 and 11, in particular by defining the features that a call is periodically retried. The user is therefore no longer needed to perform additional operations by himself.

Preferred embodiments are defined by the subject matters of the dependent claims. In particular, it is advantageous that the user is automatically informed of the reasons of a failure.

The invention will become more apparent from the following detailed description when taken in conjunction with the accompanying drawings in which:
Figure 1 is a block diagram of a radio communication terminal having a call retry function according to a preferred embodiment of the invention; and
Figure 2 is a flow chart showing a control process of the radio communication terminal of Figure 1.

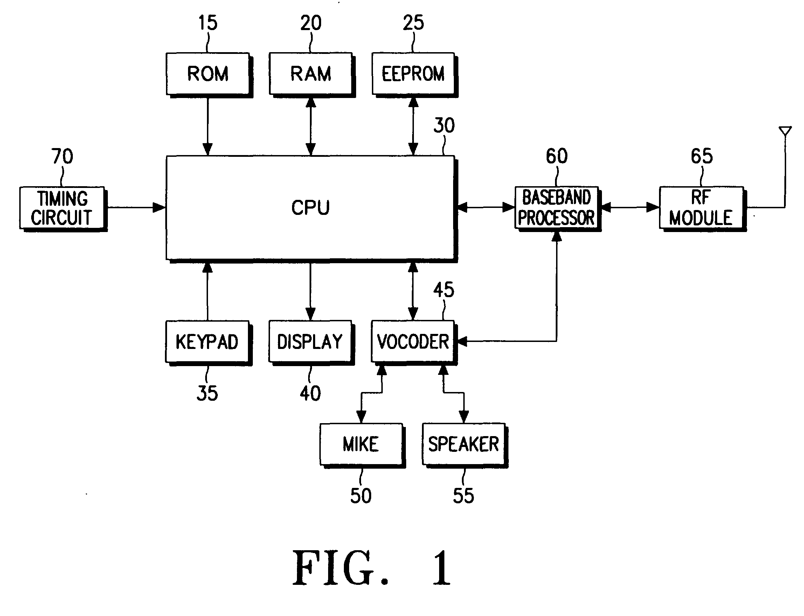

Referring to Figure 1, a read only memory (ROM) 15 is used for storing programs and data for controlling a call retry operation or other operations of a radio communication terminal. A random access memory (RAM) 20 is used for temporarily storing data generated when the radio communication terminal retries a call or executes other operations. An electrical erasable and programmable read only memory (EEPROM) 25 stores a call retry time and a call retry interval. A keypad 35 is a user interface for allowing the user to input the call retry time, the call retry interval, or the like.

A central processing unit (CPU) 30 is used to determine whether a call is established. If the call fails, the CPU 30 reads the call retry time and call retry interval from EEPROM 25 and controls for a designated time, the call retry operation until the call connection is established. Preferably, the designated time is the call retry time.

A radio frequency (RF) module 65 is provided for receiving information about a call connection failure via an antenna from a base station and for transmitting the user's voice signal or other control signals. A base band processor 60 is connected between the CPU 30 and RF module 65 for processing RF signals which are received or which are to be transmitted.

A display 40 displays information about a call connection failure. Preferably, the display is a liquid crystal display (LCD). A vocoder 45 is connected to the base band processor 60, a microphone 50 and a loudspeaker 55 and is used to synthesise a voice signal. The vocoder 45 generates a melody sound indicating call success or failure, depending on if the connection is established or not. A timing circuit 70 supplies timing information related to the call retry time and call retry interval to the CPU 30.

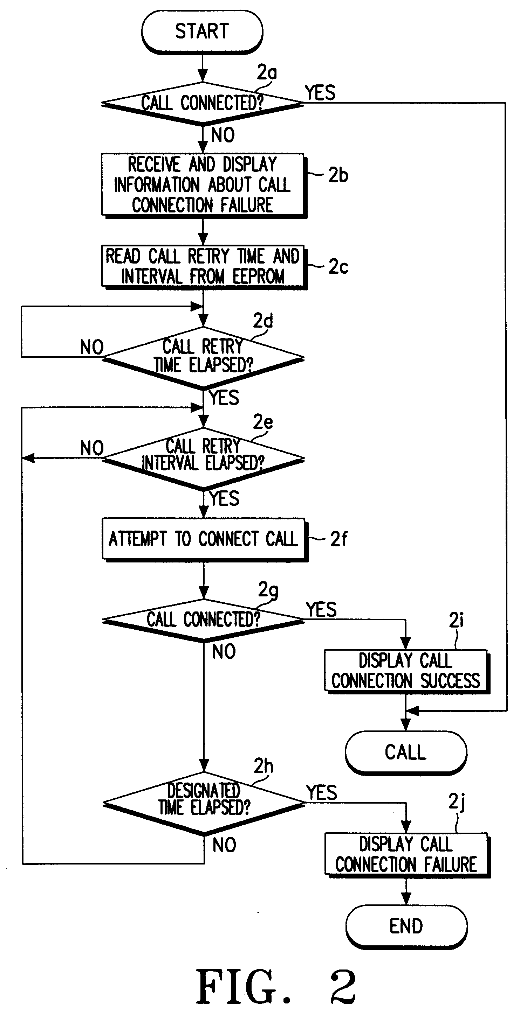

Figure 2 is a flow chart showing a call retry control process of a radio communication terminal of figure 1. In response to a call request from the user, the CPU 30 attempts to place a call by selecting a channel and converting key data corresponding to a telephone number of a called party into a message form. At step 2a, the CPU 30 checks whether the connection has been established. If not, the CPU 30 receives information about the call connection failure from the base station and controls the display 40 to display the received information at step 2b. This information may indicate a busy state of the called party, an unavailability of channels due to communication congestion, or other problems of communication.

At step 2c, the CPU 30 reads the call retry time and call retry interval from EEPROM 25. At step 2d, the CPU 30 then checks whether the call retry time has elapsed. If so, the CPU 30 repeatedly attempts at steps 2e and 2f to establish the connection at the call retry interval. The CPU 30 then checks at step 2g whether the call connection is established. If so, the CPU 30 informs the user thereof at step 2i by displaying a call success information at display 40 or by generating sound of a specific melody by means of vocoder 45 and speaker 55. On the other hand, if the connection has not been established at step 2g, the CPU 30 checks whether a designated time has elapsed at step 2h. If the designated time has elapsed, the CPU 30 informs the user at step 2j that the call could not be connected. If however, the designated time has not elapsed, the CPU checks whether the call retry interval has elapsed at step 2e.

As described above, if a connection can not be established the terminal automatically retries to place the call. In other words, once the call retry time and call retry interval are registered, the terminal retries the call at corresponding intervals if the corresponding retry time elapses. Therefore, there is no need for the user to perform an additional operation in order to repeatedly attempt to connect the call. Additionally, the user is informed of the reason why a connection could not be established. Since the call retry interval may freely be set, the probability that the call is not connected can be minimised.

## Claims

1. A radio communication terminal, comprising:
first means (30) for judging whether a call is connected; and
second means (30) for, in the event of a call connection failure, periodically retrying the call at call retry intervals for a call retry time.

2. The radio communication terminal according to claim 1 wherein the second means (30) is adapted to wait a time interval before retrying the first time.

3. The radio communication terminal according to claim 2, further comprising:
a memory (20, 25) for storing a telephone number and at least one time interval;
wherein the second means (30) is adapted to read said time interval from said memory (20, 25).

4. The radio communication terminal according to claim 3 wherein the memory (20, 25) is adapted to store as the at least one time interval the call retry interval and the call retry time.

5. The radio communication terminal according to one of claims 1 to 4, further comprising:
third means (30) for receiving from a base station information about the call connection failure, and
a display unit (40) for displaying a message corresponding to said information.

6. The radio communication terminal according to one of claims 1 to 5, further comprising alarm means (40, 45, 55) for informing the user whether the connection has been established or not once the call retry operation is completed.

7. The radio communication terminal according to claim 6, wherein said alarm means (40, 45, 55) includes a display unit (40).

8. The radio communication terminal according to claim 6 or 7, wherein said alarm means (40, 45, 55) includes a melody generator (45).

9. The radio communication terminal according to one of claims 6 to 8, wherein said alarm means (40, 45, 55) includes a loudspeaker (55).

10. The radio communication terminal according to one of claims 3 to 9, wherein said memory is an electrically erasable and programmable read only memory EEPROM (25).

11. A method for performing a call retry function on a radio communication terminal, the method comprising the steps of:
attempting to call;
judging (2a) whether a call is connected or not; and
in the event of a call connection failure, periodically retrying (2f) the call at call retry intervals for a call retry time.

12. The method according to claim 11, further comprising the step of waiting (2d) a time interval before periodically retrying the call.

13. The method according to claim 11 or 12, further comprising the step of reading (2c) at least one time interval from a memory.

14. The method according to claim 13, wherein at the step of reading, the call retry interval and the call retry time are read.

15. The method according to one of claims 11 to 14, further comprising the steps of:
receiving (2b) from a base station information about the call connection failure; and
displaying (2b) a message corresponding to said information.

16. The method according to one of claims 11 to 15, further comprising the step of informing (2i, 2j) the user whether the connection is established or not.

17. The method according to claim 16 wherein the step of informing the user includes displaying a message.

18. The method according to claim 16 or 17 wherein the step of informing includes generating a melody.
